(19)

Europäisches
Patentamt
European
Patent Office
Office européen
des brevets

(11) **EP 4 015 419 A1**

(12) **EUROPEAN PATENT APPLICATION**

(43) Date of publication:
**22.06.2022 Bulletin 2022/25**

(21) Application number: **21020614.0**

(22) Date of filing: **06.12.2021**

(51) International Patent Classification (IPC):
***B65G 27/12*** *(2006.01)*

(52) Cooperative Patent Classification (CPC):
**B65G 27/12**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2020 IT 202000030956**

(71) Applicant: **Cruciani, Stefano**
**06083 Bastia Umbra (PG) (IT)**

(72) Inventor: **Cruciani, Stefano**
**06083 Bastia Umbra (PG) (IT)**

(74) Representative: **Ruzzu, Giammario**
**Via Gulli, 5**
**40068 San Lazzaro di Savena (BO) (IT)**

(54) **OSCILLATING CONVEYOR FOR THE TRANSPORT OF DISCRETE PRODUCTS IN BULK**

(57)    An oscillating conveyor (10) is des cribbed that is aimed at conveying discrete products in bulk (20) such as crisps, potato chips, pop-corn, cookies and the like, but also more generally grains, gravel, sand, particulate products in general, comprises a support plane (4) carried and guided by a bearing structure (7) which allows movements of the support plane in a predetermined conveying direction (T); a conveying channel (5) associated with the support plane (4) for conveying therein the products in bulk (20); the support plane and conveying channel are moved by an actuating device (9) along their longitudinal axis with a reciprocating movement in a first direction (V1) and back, in a second direction (V2) opposite to the first direction (V1) with such a speed as to make the products (20) slide on the bottom (15) of the conveying channel (5) at a point (W) of inversion of movement, to make said products in bulk (20) move in sequence and advance stepwise. An actuation is provided by a a crank mechanism (2) and a connecting rod (3) fixed to the support plane (4).

**Fig. 1**

EP 4 015 419 A1

**Description**

The present invention relates to the field of automatic packaging of products and in particular concerns a conveyor/conveyor aimed at transporting different types of discrete materials in bulk during the packaging process, in various manufacturing fields.

It is known that in the field of production and processing, in particular packaging, of different types of discrete items in bulk, for example foodstuffs such as crisps, potato chips, pop-corn, cookies and the like, but also more generally grains, gravel, sand, particulate products in general, it is often necessary to transfer such products in bulk from one point of the production facility to another, even at short distances.

For example, the products are collected at the outlet of a production device to be transported and then fed to a device, for example, for packaging or dosing or other similar device normally used in the course of packaging.

For this purpose, different types of conveyors/conveyors have been designed and manufactured over time, depending on different needs and conditions of use, as well as on the type of products handled.

By way of example, a known type of conveyor uses a belt, which is driven electrically by means of a motor that drives the rollers on which the belt is mounted. The construction of this type of conveyor requires a complex bearing structure to carry the motorized drums, return rollers and belt. Containment sides with small flanges are provided for containing laterally the products, which causes problems due to their close placement as they are necessarily stationary while on the contrary the belt is in motion. If too much space is left, the products being transported can slip thereinto, accumulate therein and cause jams, debris, dirt, etc. If the products are perishable and remain unremoved and hidden in the spaces between the different components, hygiene problems may also arise, which should be particularly avoided when handling products intended for human or animal consumption.

Finally, it is necessary to provide protective casings on all moving parts.

Therefore, the currently encountered drawbacks of this type of conveyor include a complicated construction, since all moving parts must be adjustable, a regular maintenance, since the belt is subject to elongation and skidding, in case of off-center loading of the products, with possible jamming thereof.

Moreover, significant wear of the moving mechanical parts and possible deterioration of the products during unloading often occur due to the jump caused by the thickness of the structure.

Containment flanges are also subject to rapid wear and on the whole the products can be contaminated to some extent with residues deriving from wear and the lubricants used on all moving parts.

As already said, in addition to all that, there is the undeniable difficulty of cleaning and the necessary sanitization, due to all the hidden parts.

The problems encountered with the adoption of conveyors with modular belt, likewise electrically driven, are not different.

In addition to the above mentioned difficulties, the conveyor with modular belt presents further problems associated with the cleaning of modules, especially inside the connecting hinges.

Other limitations found in belt conveyors of both described types derive from the fact that they can unload products only from the front.

In the case of screw conveyors, likewise electrically driven, the transport is carried out by means of a screw placed inside a tube or shaped case with closed geometry.

The particularly severe problems of these types of conveyors are due to the combination of the moving parts of the screw with the fixed parts of the tube or casing. Products of small thickness are likely to enter the gaps between moving and fixed parts, which makes them unsuitable.

In addition to the difficulties deriving from the residual material in the gaps between screws/tubes or shaped cases, it is also impossible to see or control the products during the transport thereof, and moreover, the products can be contaminated by the lubricants of the supports.

Conveyors have also been designed in which the products are moved by the vibration of a containment channel.

The vibration is produced by suitable electrically driven apparatuses, to which the channel of containment and transport of the products is fixed by means of a bearing structure with oscillating or elastic supports, for example oscillating arms as described in the document US 4,313,535, or springs.

The rotation of eccentric masses causes a vibration of the channel which is suitably inclined with respect to the horizontal and makes the products move forward therealong.

The disadvantages of such systems relate to the masses involved in the creation of the oscillatory motion, which lengthen the start and stop timing, and to the frequencies of vibrations, which in some cases reach the resonance values of the structure, creating instability, undesired and dangerous vibrations of the whole structure.

Besides these drawbacks, conveyors of this type require frequent maintenance operations and their construction and operation are expensive.

Furthermore, they are not very versatile, since the change of the channel size is complex and laborious and moreover the vibration characteristics cannot be easily changed, since the eccentric masses must be replaced.

The conveying direction can be reversed only rotating the whole conveyor, since not only the vibrations, but also the inclination of the channel with respect to the horizontal is decisive for the advancement of the products.

Conveyors have also been developed in which the conveying channel is stressed by a horizontal reciprocating movement instead of a vibration.

A driving mechanism moves the channel in the forward direction at one speed and then brings the channel back to its initial starting position at a higher speed, so that the discrete products in bulk the channel tend to remain stationary crawling on the bottom of the channel, thus effectively advancing stepwise with each movement in the forward direction at a low speed. An example is described in WO2011/071617. However, these conveyors still present a number of drawbacks and problems. First of all, the channel is usually carried by oscillating supports, such as oscillating arms hinged at a base and pivoted at the tops with the conveying channel. To ensure sufficient extension range, the oscillating arms must have a certain length. The length of the oscillating arms determines a likewise great height of the conveyor, increasing the size and dimensions of the device.

The size of the driving mechanism of the swinging arms, consisting of electric, pneumatic or similar linear actuators, also contributes to the increase in size. All this results in a massive construction that occupies space.

In addition to these drawbacks, there is the fact that moving the channel by the oscillating arms, also in view of sudden movements aimed at conveying the products, causes an oscillation of the channel in the vertical direction, which could make the products bounce during the transfer.

Document US 2007/017783 describes a vibrating conveyor provided for moving items along a transport element carried in motion in opposite directions in a rectilinear direction repeatedly, so as to transport the items arranged on the transport element in one of the directions of motion. The assembly includes an electrical drive unit controlled by a control unit and at least one sensor capable of sensing movement of the transport element. The control unit provides a first level of electrical energy to the drive unit during the first part of the reciprocating movement and a second level of energy during the second part of the reciprocating movement. Furthermore, the control unit provides selective control over the duration of the first and second parts of the reciprocal movement thereby controlling the speed of each of the directions of the reciprocal movement of the transport element.

It is therefore an object of the present invention to propose an oscillating conveyor for conveying discrete products in bulk, which does not present the problems mentioned with reference to the prior art, which in particular is provided with a simple and clean moving mechanism, whose operation is reliable and which requires regular maintenance according to ordinary times.

Another object of the present invention is to provide an oscillating conveyor which is moved so that not to damage in any way the transported products, which does not invclude any wear parts, and which is easy and practical to clean and/or sanitize.

A further object of the invention is to provide an oscillating conveyor with limited overall dimensions.

These and other objects that will be clear from the following description are all achieved by an oscillating conveyor made in accordance with the contents of the claims.

The characteristics of the invention not emerging from what above will be made apparent in the following description, to be taken with reference to the enclosed drawings, in which:

Figure 1 illustrates a general view of the oscillating conveyor made according to the invention;
Figure 2 represents partially the oscillating conveyor with the open driving mechanism in exploded view to highlight the positioning of the various components;
Figures 3A, 3B, 3C, 3D illustrate various subsequent dynamic conditions of the components of the driving mechanism, according to the invention;

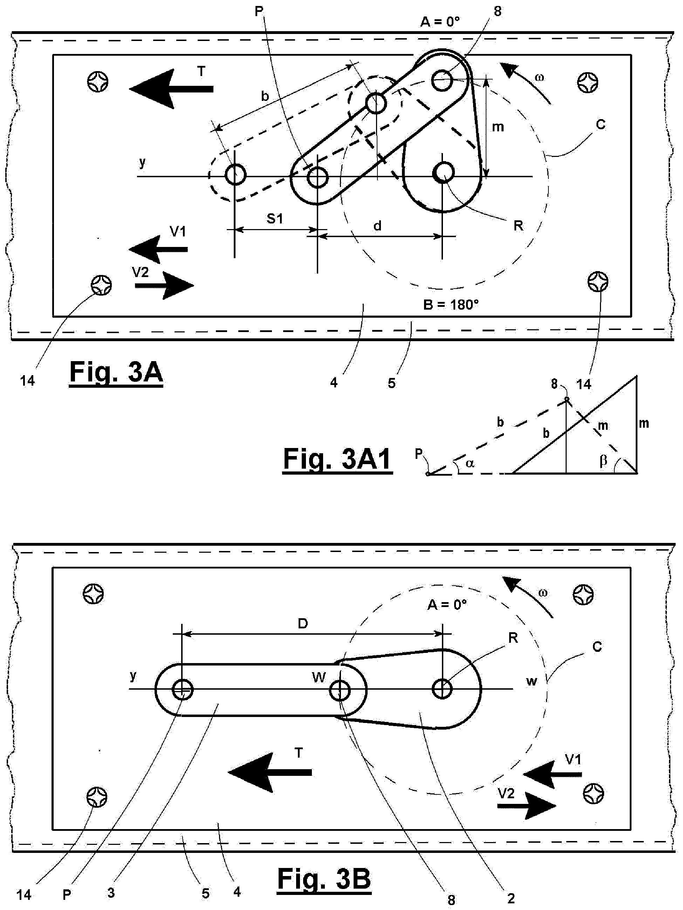

Figure 3A1 shows a simplified scheme of the situation in Figure 3A for clarity.

## DETAILED DESCRIPTION

With reference to the above figures, an oscillating conveyor 10 is described, of the type provided for conveying discrete products in bulk 20, for example foodstuffs such as crisps, potato chips, popcorn, cookies and the like, but also more generally grains, gravel, sand, particulate material and the like.

In general, the conveyor includes a support component 4, a bearing and guiding structure 7 for the support component 4, and a conveying member 5.

The support component 4 comprises a shaped plane, for example like an inverted "U", and the conveying member 5 is attached and extend parallel thereto, so as to move together with it. Discrete products in bulk 20, which are to be transferred from one point to another, are transported within the conveying member.

In detail, the conveying member 5 associated with the support component 4 comprises a "U" shaped channel 5 having a bottom 15, fixed to the shaped plane 4, and two walls 16 extending from the bottom 15 vertically, or nearly vertically, i.e. at a predetermined angle with respect to the vertical.

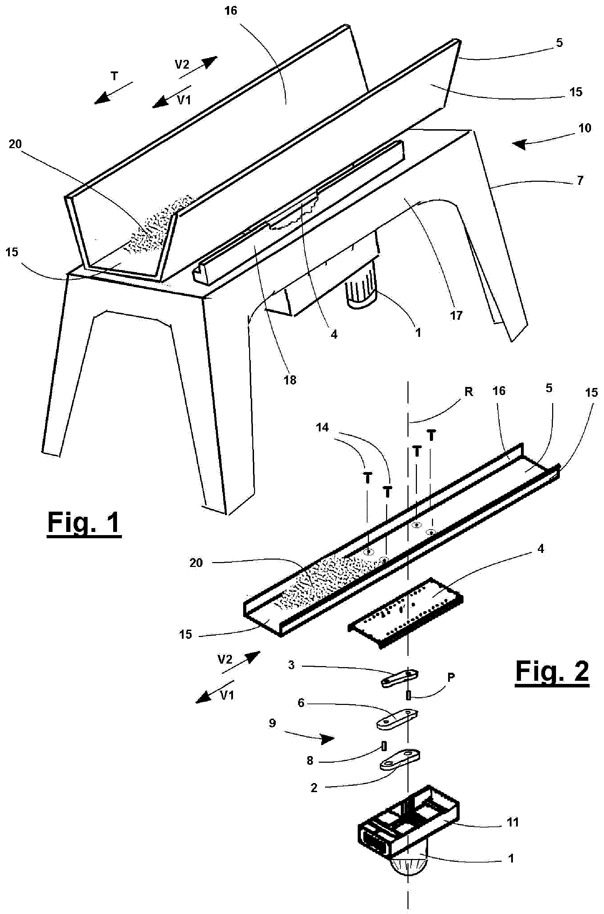

The channel 5 can be fixed to the plane 4, by way of example, by means of screws 14 (figure 2) whose head is flush with the surface of the bottom 15. Obviously, it is possible to use other fastening means, considering that it must be possible to replace the channel 15 both due to possible wear or break and to adapt to different quantities and types of products to be conveyed.

In the embodiment referred to as an example, the channel 5 is made of a sheet of stainless steel and has a square "U" shape.

However, other shapes may be used, if considered more suitable.

The discrete products in bulk 20, which may be foodstuffs such as crisps, potato chips, pop-corn, cookies and the like, but also more generally grains, gravel, sand, particulate material in general, are then received at the outlet of a device to be arranged at one end of the conveyor 1, within the channel 5, to be transported towards the other end of the conveyor and fed to, for example, a packaging or dosing device or another similar device normally employed in the course of packaging of such products 20.

The bearing and guiding structure 7 of the support component 4 comprises a frame 17 on which parallel guides 18 are fixed, oriented according to the predetermined transport direction T and along which the support plane 4 slides, which is therefore made move in the transport direction T only, in particular in the longitudinal direction of the conveying member or channel 5.

In order to make the products 20 move forward along the channel 5 in the direction T, the channel 5 is first moved forward for an extended length in a first direction V1, and then with a return movement in the opposite direction V2, with a first speed that makes the products move together with the channel 5, but such that at the point of inversion of movement W the products 20 will tend to stay, and when sliding on the bottom 15 of the channel 5, they will not return to their initial position together with the channel 5, as will be better seen in the following. Thus they will move along the channel 5 in the direction T and in the direction V1.

Then channel 5 is made move in the opposite direction V2 and then return to the starting point in the direction V1, but with a more limited displacement and a lower velocity V2, so that at the point of inversion of movement w, the products 20 will not be able to overcome the friction resistance force with the bottom 15 and will be brought back together with the channel 5 to the starting point.

The succession of similar cycles results in a stepwise forward movement of the products 20 in the direction T.

In order to realize this reciprocating movement of the channel 5 with differentiated speeds, an actuating device 9 of the support component 4 is used to determine its displacement along its longitudinal direction which coincides with the prefixed direction T with reciprocating movement and comprises a kinematic mechanism composed as follows.

The actuating device 9 comprises a crank mechanism including a crank 2 rotatable about a rotation axis R perpendicular to the support component 4.

The end of the crank arranged at a first distance m from the rotation axis R is rotatably fastened, by means of a pin 8, to a connecting rod 3, which in turn is rotatably attached directly or indirectly, as will be seen below, to the support component or plane 4.

In order to obtain the rotation in a horizontal plane, the crank 2 is keyed, or otherwise connected, to the output shaft of motorized means 1, comprising, by way of example, an electrically driven gear motor 1.

The gear motor is then able to determine the rotation of the crank 2 about the rotation axis R according to a constant angular velocity w.

Since the crank 2 is rotated with constant angular velocity w, several dynamic conditions occur between the connecting rod 3 and crank 2 for each revolution of the latter, which are better defined below with reference to Figures 3A, 3A1, 3B, 3C and 3D.

During the rotation of the crank 2 in which the pin 8 moves along the circumference C from a first point A, or 0° position of the crank corresponding to the positioning of the crank 2 perpendicular to the direction T of transport, toward the point W. At the same time, the pin P of the connecting rod 3 connected with the support plane 4 and channel 5 moves along the straight line y, which passes through the rotation axis R and is parallel to the channel 5 in the direction V1, and reaches the maximum distance from the rotation axis R in this same direction V1. Figure 3A further shows an intermediate position (indicated with dashed line) of the crank 3 and connecting rod 2.

It can be seen that the displacement S1 of the pin P from the starting point with the connecting rod in position A = 0 is given by the difference of the total distance of the pin P from the rotation axis R and the projection of the length b of the connecting rod 3 on the straight line y at the initial moment of movement (d = distance of the pin P from the rotation axis R with crank 2 in position A = 0°).

The total distance D is given by the sum of the projections of the connecting rod 3 and crank, of length m, on the straight line y, varying as the pin 8 moves along the circumference C.

To be precise and with:

$\alpha$ = angle between the connecting rod 3 and the straight line y
$\beta$ = angle between the crank 2 and the straight line y (angle of rotation of the crank)

$\alpha_0$ = angle with the crank in position A = 0°
we have that

$$S1 = b * \cos \alpha + m * \cos \beta - b * \cos \alpha_0 \ (1)$$

or also

$$S1 = b * \cos \alpha + m * \cos \beta - \sqrt{b^2 - m^2} \ (1a)$$

When the pin 8 reaches the position W rotated by 90° (figure 3B), the crank 2 and connecting rod 3 are arranged parallel to the advancing direction T, lying on the straight line y.
In this case, (1) becomes:

$$D = b * 1 + m * 1 - b * \cos \alpha_0 \qquad (2)$$

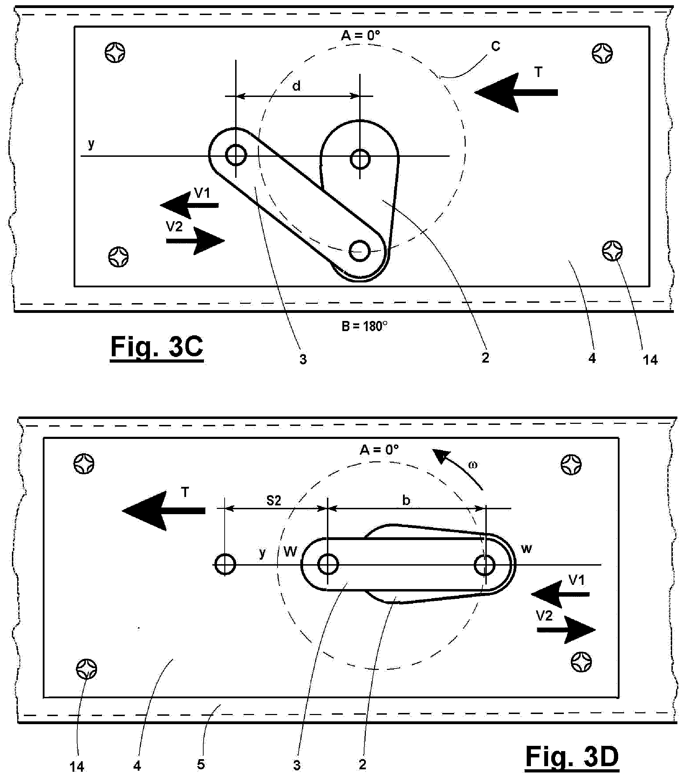

i.e. the sum of the lengths of the connecting rod and crank with the subtraction of the initial distance d of the pin P from the rotation axis R.
The continuation of the rotation of the crank 3 brings the pin 8 to the position B (figure 3C) = 180° from the initial position, and with the channel 5 actually brought back to the initial position.
The inversion of the direction from V1 to V2 occurred at point W with such a speed that the change of direction was sudden enough to make the products 20 lose adherence to the bottom 15 of the channel 5.
As already said, this fact causes a relative displacement of the products 20, which slide on the bottom 15 with respect to the channel 5 in the advancing direction T.
In practice, we have the previous situation but on the contrary, until the position B = 180° is reached (figure 3c).
Further rotation of the crank 2 brings the pin 8 to the most backward position w along the direction T, moving the pin P, together with the channel 5, in the direction V2 opposite to the direction V1, and then again in the direction V1 after passing the point w.
However, in this case, the displacement S2 of the pin P with respect to the starting point with the connecting rod in position A = 0 is given by the difference of the initial distance of the pin P from the rotation axis R at the initial moment of the movement (d = distance of the pin P from the rotation axis R with the crank 2 in position A = 0°), from which the difference between the projections of the length b of the connecting rod 3 and crank 2 on the straight line y is subtracted.

$$S2 = b * \cos \alpha_0 - (b * \cos \alpha - m * \cos \beta)$$

$$S2 = b * \cos \alpha_0 - (b * \cos \alpha - m * \cos \beta) \qquad (3)$$

or also

$$S2 = \sqrt{b^2 - m^2} - b * \cos \alpha + m * \cos \beta \qquad (3a)$$

When the pin 8 has reached the position w, the crank 2 and connecting rod 3 are again arranged parallel to the advancing direction T, lying on the straight line y but overlapping each other (Figure 3D).
In this case, (3) becomes:

$$S2w = b * \cos \alpha_0 - b * 1 + m * 1 \qquad (3A)$$

That is, the difference between the lengths b and m of the connecting rod and crank must subtracted from the initial distance d.
It is evident that, if at the position W in order to calculate the maximum displacement, it was necessary to add the lengths of the connecting rod and crank and then to subtract an irrelevant part corresponding to the initial distance from the rotation axis R, at the position w the displacement S2 is less than the irrelevant part d of the initial distance, from which the difference in length between the connecting rod and crank is subtracted.

Therefore, it is demonstrated that the displacement S1 done by pin P, consequently by the channel 5, in the arc covered by the pin 8 (rotation of the crank 2) from 0° to 180° is significantly greater than the displacement S2 done by the pin P, consequently by the channel 5, in the arc covered by the pin 8 in the remaining arc of 180° to return to the starting point.

However, since the angular velocity w of the rotation of the crank is constant, the times in which the paths S1 and S2 are covered will be equal and the speed with which they are covered will be different.

By arranging the major path S1 in the direction V1 coincident with the advancing direction T, a sudden inversion of direction is obtained precisely in the advancing direction T, thus determining the feeding of products 20 in that direction.

For example, if the crank is 50 mm long and the connecting rod is 80 mm long, the displacement from position A = 0° in position W will be

$$80 + 50 - 62.5 = 67.5 \text{ mm}$$

Whereas in the position w the displacement will be:

$$62.5 - (80-50) = 32.5 \text{ mm}.$$

(The values are only hypothetical and illustrative and may not correspond to those implemented in the construction of the device).

Therefore, the succession of rotations of the crank 2 determines a corresponding succession of stepwise forward movements of the products 20 in the channel 5, resulting in the transfer of the products from one end of the conveyor 1 to its opposite end.

It has been noticed from experimental tests that these measures, 50 mm for the crank and 80 mm for the connecting rod, i.e. a ratio of 5:8 between these two components, represents the configuration with the highest operating efficiency.

If it is desired to have the possibility of inverting the direction of stepwise advancing of the products 20 in the channel 5, a linking rod 6 can be provided interposed between the connecting rod 3 and support plane 4. The linking rod makes it possible to reverse the position of the connecting rod 3 by 180° with respect to the crank 2 while maintaining the same point of application of the displacement force on the support plane 4, and consequently the point of inversion of movement with higher speed will phase-displaced by 180°, reversing the situation described above.

The actuating device as described represents the preferred embodiment of the invention, but it is possible to realize the aforementioned stepwise movement of the products 20 using a different movement mechanism, for example electromagnetic, pneumatic or hydraulic, driven by a mechanical or electronic control system, easily conceived by one skilled in the art.

In any case, whatever the configuration of actuating device 9, it is housed within a box-like casing 11 fixed to the structure 7 below the support component 4.

If a partial or total discharge of the products 20 before the end of the channel 5 is desired, one or more apertures 12 may be provided, made in the bottom 15 or in the walls 16 of the conveying member or channel 5.

The apertures 12 are normally closed by means of suitable corresponding closing elements 13 controlled by servomechanisms, in such a way that when they are opened, part or all of the products 20 can be discharged in one or more points, other than the outlet end of the channel 5.

The proposed conveyor is very versatile and easy to use in different fields.

It can be used as a conveyor system in the following fields:

- food industry (production of food dough, processing of fruit and vegetables, processing of cereal products, processing of dried fruit, pet food);
- pharmaceutical industry (bulk or packaged products, medicinal herbs);
- systems for processing recyclables (plastics, glass, WEEE elements);
- wood processing industry (processing wastes);
- chemical industry (building products, fertilizers).

The simple and practical configuration of the conveyor allows to obtain the following advantages:
In the passage or junction between two or more fluidized bed conveyors, the products do not bounce due to differences in height, maintaining its integrity. The assurance that the products do not deteriorate is a fundamental aspect in favour of using the proposed conveyor.

The products can be discharged in several points along the conveyor in a simple and functional way, providing additional discharging apertures.

The forward movement of the products can be reversible, without having to relocate the entire structure. It is sufficient to change the position of the linking rod between the connecting rod and support plane to invert the direction of products forward movement.

The simplicity of the driving mechanism allows to save a consistent amount of installed power and to occupy less space.

Size change-over of the feeding channel is practically immediate, as it is enough to remove the screws fixing it to the support plane, replace the channel with the one to be used, and reposition the screws tightening them.

All this result in the functionality of positioning and the possibility of immediate use of the device.

It should also be noted that the products, in the forward movement phase, also benefit from a thinning action that improves the transport quality.

In the non-use phases, the conveying channel can be quickly removed, leaving free spaces in the production activity area, and in general the use of the proposed conveyor is considerably advantageous in economic terms.

**Claims**

1. An oscillating conveyor (10) for conveying (20) discrete products in bulk, comprising:

   a support component (4);
   a bearing and guiding structure (7) for said support component (4), allowing movement of said support component (4) along a predetermined transport direction (T);
   a conveying member (5), associated with said support component (4) and
   aimed at conveying products in bulk (20) therein; and
   an actuating device (9) of said support component (4) for moving said support component (4) along a longitudinal extension thereof with reciprocating movement in a first direction (V1) and, back, in a second direction (V2) opposite to said first direction (V1), with such a first speed that makes the products (20) slide on the bottom (15) of said conveying member (5) at a point (W) of inversion of movement, so as to make said products in bulk (20) move in sequence and advance stepwise along said conveying member (5);
   **characterized in that:**

   said actuating device (9) includes a crank mechanism comprising a crank (2) rotating about a rotation axis (R) perpendicular to said support component (4), rotatably fixed by means of a pin (8) at the end situated at a first distance (D1) from said rotation axis (R), to a connecting rod (3), which in turn is rotatably fixed to said support component (4), and motor means (1) aimed at making said crank (2) rotate around said rotation axis (R);
   wherein said crank (2) is rotated with constant angular velocity ($\omega$), and over an arc of rotation of 180° of said crank (2) in which said crank (2) and connecting rod (3) do not overlap said pin (8) moves from a first position (A) to a second position (B) with subsequent opposite directions (V1, V2) passing through a point (W) in which the motion of said support component (4) and conveying member (5) is inverted at high speed, causing a sliding and advancement of the products (20) on the bottom (15) of said conveying member (5), while over an arc of rotation of 180° of said crank (2) in which said crank (2) and connecting rod (3) overlap, in whole or in part, said pin (8) moves from the second position (B) to the first position (A) with subsequent opposite directions (V2, V1) passing through a point (w) at which the direction of motion of said support component (4) and conveying member (5) is inverted at low speed, insufficient to cause sliding of the products (20) on the bottom (15) of said conveying member (5).

2. Oscillating conveyor (10) according to claim 1, wherein said motor means (1) comprises an electrically driven gear motor (1).

3. Oscillating conveyor (10) according to claim 1 or 2, wherein a rod (6) is provided interposed between said connecting rod (3) and crank (2), said rod (6) being aimed at allowing an inversion of the transport motion of said discrete products in bulk (20) by means of the rotation by 180° of said connecting rod (3) with respect to said crank (2).

4. Oscillating conveyor (10) according to one of the claims 1 to 3, wherein said actuating device (9) is contained in a box-like casing (11) attached to said structure (7) below said support component (4).

5.  Oscillating conveyor (10) according to one of the claims 1 to 4, wherein said conveying member (5) associated with said support component (4) and aimed at transporting therein products in bulk (20) comprises a U-shaped channel (5) having a bottom (15) attached to said support component (4) and two walls (16) extending from said bottom (15) vertically or at a predetermined angle with respect to the vertical.

6.  Oscillating conveyor (10) according to one of the claims 1 to 5, wherein the ratio of said connecting rod (3) to said crank (2) is 8:5, and in particular the length of said connecting rod (3) is 80 mm while the length of said crank is 50 mm.

7.  Oscillating conveyor (10) according to one of the claims 1 to 6, wherein said bearing and guiding structure (7) of said support component (4) comprises a frame (17) on which parallel guides are fixed on which said support component (4) is carried to slide according to said predetermined transport direction (T).

8.  Oscillating conveyor (10) according to one of the claims 1 to 7, wherein one or more apertures (12) are provided in said conveying member (5), normally closed by means of suitable corresponding closing elements (13), aimed at allowing, when open, said products (20) to be discharged at one or more points other than the outlet end of said conveying member (5).

**Fig. 1**

**Fig. 2**

**Fig. 3A**

**Fig. 3A1**

**Fig. 3B**

**Fig. 3C**

**Fig. 3D**

Europäisches
Patentamt

European
Patent Office

Office européen
des brevets

# EUROPEAN SEARCH REPORT

Application Number

EP 21 02 0614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/017783 A1 (KWASNIEWICZ RONALD W [US]) 25 January 2007 (2007-01-25) * paragraphs [0006], [0024] – paragraph [0033] * * figures 1-3 * | 1-8 | INV. B65G27/12 |
| A | US 7 581 459 B2 (GOURJON DIDIER [FR]) 1 September 2009 (2009-09-01) * column 3, line 36 – line 61 * * column 4, line 11 – column 5, line 20 * * figures 1,2a,2b,3,4,6 * | 1 | |
| A | WO 2018/218095 A1 (KAREN SUE SVEJKOVSKY TRUSTEE OF THE PAUL A SVEJKOVSKY FAMILY TRUST [US] 29 November 2018 (2018-11-29) * paragraph [0054]; figures 1-12,14-16 * | 1 | |
| A | DE 100 26 421 A1 (HAUERS MANFRED [DE]; VITS DIETER [DE]) 6 December 2001 (2001-12-06) * paragraph [0025]; figures 1-3 * | 1 | |

TECHNICAL FIELDS
SEARCHED (IPC)

B65G

The present search report has been drawn up for all claims

| Place of search | Date of completion of the search | Examiner |
|---|---|---|
| The Hague | 2 May 2022 | He, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 02 0614

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2022

| Patent document cited in search report | Publication date | Patent family member(s) | Publication date |
|---|---|---|---|
| US 2007017783 A1 | 25-01-2007 | NONE | |
| US 7581459 B2 | 01-09-2009 | AT 469069 T | 15-06-2010 |
| | | AU 2002321390 A1 | 03-03-2003 |
| | | CA 2452060 A1 | 09-01-2003 |
| | | EP 1401746 A2 | 31-03-2004 |
| | | ES 2346515 T3 | 18-10-2010 |
| | | FR 2826642 A1 | 03-01-2003 |
| | | JP 2004532169 A | 21-10-2004 |
| | | US 2005028621 A1 | 10-02-2005 |
| | | WO 03002435 A2 | 09-01-2003 |
| WO 2018218095 A1 | 29-11-2018 | NONE | |
| DE 10026421 A1 | 06-12-2001 | NONE | |

EPO FORM P0459

For more details about this annex : see Official Journal of the European Patent Office, No. 12/82

**EP 4 015 419 A1**

**Patent documents cited in the description**

- US 4313535 A
- WO 2011071617 A
- US 2007017783 A